# NEUE EUROPÄISCHE PATENTSCHRIFT

(11) **EP 0 944 894 B2**
(45) Veröffentlichungstag und Bekanntmachung des Hinweises auf die Entscheidung über den Einspruch: **14.01.2004**
(45) Hinweis auf die Patenterteilung: 11.10.2000
(21) Anmeldenummer: 97953604.2
(22) Anmeldetag: 26.11.1997
(51) Int. Cl.: G08G 1/0968

(54) **VERFAHREN ZUR RECHNERGESTÜTZTEN NAVIGATION EINES FAHRZEUGES MIT EINEM ENDGERÄT, ENDGERÄT UND VERKEHRSZENTRALE**
COMPUTER-CONTROLLED NAVIGATION PROCESS FOR A VEHICLE EQUIPPED WITH A TERMINAL, TERMINAL AND TRAFFIC INFORMATION CENTRE
PROCEDE DE NAVIGATION ASSISTEE PAR ORDINATEUR D'UN VEHICULE EQUIPE D'UN TERMINAL, TERMINAL ET CENTRAL D'INFORMATIONS ROUTIERES

(30) Priorität: 16.12.1996 DE 1965369; 20.11.1997 DE 1975317
(43) Veröffentlichungstag der Anmeldung: 29.09.1999
(73) Patentinhaber: ATX Europe GmbH, 40547 Düsseldorf (DE)
(72) Erfinder: MEIS, Josef, D-48147 Münster (DE); OPPLER, Jens, D-40217 Düsseldorf (DE); STANGIER, Peter, D-50389 Wesseling (DE)
(74) Vertreter: Meissner, Peter E., Dipl.-Ing.
(86) Internationale Anmeldenummer: PCT/DE1997/002816
(87) Internationale Veröffentlichungsnummer: WO 1998/027528

(56) Entgegenhaltungen:
- EP-A- 0 583 773
- EP-A- 0 702 209
- EP-B- 0 123 562
- DE-A- 4 139 581
- DE-A- 4 226 230
- DE-A- 4 429 322
- US-A- 5 430 653
- PATENT ABSTRACTS OF JAPAN vol. 096, no. 008, 30.August 1996 & JP 08 094374 A (NISSAN DIESEL MOTOR CO LTD), 12.April 1996,

## Beschreibung

Die Erfindung betrifft ein Verfahren zur rechnergestützten Navigation eines Fahrzeuges mit einem Endgerät, ein Endgerät und eine Verkehrszentrale.

Navigationssysteme zur rechnergestützten Navigation eines Fahrzeuges mit einem Endgerät in einem Verkehrsnetz unter Verwendung einer digitalen Karte des Verkehrsnetzes sind bekannt. Eine dem Fahrer des Fahrzeuges mit dem Endgerät zu empfehlende Route kann entweder im Endgerät bestimmt werden oder in einer Verkehrszentrale bestimmt und dem Endgerät Übermittelt werden. Jedoch kann aufgrund eines Staus, eines Unfalles, einer neuen Straßensperrung oder aufgrund eines Fehlers des Fahrers etc. ein Abweichen der tatsächlich vom Fahrzeug verfolgten Route von der empfohlenen Route auftreten. Systeme zur Rückführung des Fahrers auf die empfohlene, von ihm verlassene Route unter Verwendung einer digitalen Karte sind bekannt.

Aus der EP 0 583 733 A2 ist es bekannt, einen Fahrer beim Verlassen einer empfohlenen Route auf jeden Fall möglichst kurzfristig wieder auf die empfohlene Route zurückzuführen. So wird der Fahrer aufgefordert, seine Position einzugeben, wobei sämtliche Vorgaben im Rechensystem unverändert bleiben. Dieses Verfahren erkennt die Falschfahrweise des Fahrers, der absichtlich die errechnete Route verlassen hat. Von hier aus wird eine neue Route nach alten Vorgaben berechnet.

Aufgabe der vorliegenden Erfindung ist eine optimale Navigation eines Fahrzeuges auch bei Abweichung von einer empfohlenen Route. Die Aufgabe wird durch die Gegenstände der unabhängigen Ansprüche gelöst.

Während bekannte Systeme versuchen, einen Fahrer beim Verlassen einer empfohlenen Route auf jeden Fall möglichst kurzfristig wieder auf die empfohlene Route zurückzuführen, wird erfindungsgemäß angenommen, daß der Fahrer nicht grundsätzlich in allen Fällen eine empfohlene Route versehentlich verlassen hat, sondern daß der Fahrer Gründe für eine von der ersten empfohlenen Route divergierende Präferenz hat; deshalb wird bei Detektion einer Abweichung der aktuellen Position und/oder Fahrtrichtung von der empfohlenen ersten Route eine vom Fahrer des Fahrzeuges bevorzugte Route oder Teilroute, deren Existenz zumindest bis zu einer Plausibilitätsprüfung angenommen wird, bestimmt und zumindest insoweit bei der Bestimmung einer zweiten empfohlenen Route zur Zielposition berücksichtigt wird, daß eine Plausibilitätsprüfung erfolgt und daß sie unter der Bedingung positiver Plausibilitätsprüfung in die zweite Route eingeht. Das Verfähren ist dabei unabhängig von der Art der Übertragung von Daten zu einer Route. Das Abweichen von einer Route kann aufgrund einer aktuellen Fahrzeugposition und/oder aufgrund einer aktuellen Fahrzeug-Fahrtrichtung erfolgen; die Art der Zuordnung der Abweichung zur empfohlenen Route hängt von der Darstellung der empfohlenen Route ab. Eine bevorzugte Teilroute ist eine Route, die nur in einem Teilbereich, z.B. in einem Teilstück in Fahrtrichtung, von der ersten empfohlenen Route abweicht.

Das bisherige Fahrverhalten kann nicht nur beim Abweichen von einer empfohlenen Route, sondern auch bei der erstmaligen Berechnung einer Route berücksichtigt werden.

Aufgrund der empfohlenen Route werden vom Endgerät im Fahrzeug dem Benutzer des Endgerätes, also Fahrer des Fahrzeuges, Navigationshinweise zur Verfugung gestellt, also beispielsweise Informationen über von ihm wahrzunehmende Abbiegemöglichkeiten und/oder eine graphische Darstellung der Route oder eines Teils der Route.

Die Berechnung der Route erfolgt in der Verkehrszentrale, wobei Daten zu der empfohlenen Route an das Endgerät per Funk, insbesondere Mobilfunk, übertragen werden; eine Routenbestimmung in der Verkehrszentrale hat den Vorteil eines kostengünstigen Endgerätes und der Möglichkeit der unmittelbaren Verwendung von Verkehrsdaten in einer Verkehrszentrale.

Das Prinzip, anzunehmen, daß der Fahrer zumindest in einigen Fällen aufgrund einer von der ersten empfohlenen Route divergierenden bevorzugten Route oder Teilroute eine Abweichung von der empfohlenen ersten Route wahrnimmt, kann in unterschiedlicher Weise realisiert werden. So kann beispielsweise beim Abweichen von einer Route zunächst eine Plausibilitätskontrolle dahingehend erfolgen, ob es plausibel ist, daß die Abweichung von der empfohlenen Route aufgrund einer bevorzugten Route oder Teilroute (beispielsweise aufgrund dem Fahrer bekannter oder für den Fahrer ersichtlicher Staus, Verkehrshindernisse etc.) erfolgt, also daß keine versehentliche Abweichung vorliegt. Die Parameter der Plausibilitätsprüfung im Endgerät können von einer Verkehrszentrale per Funk modifizierbar sein.

Eine Abweichung kann auch dahingehend in einer verkehrszentrale berücksichtigbar sein, daß insbesondere bei Abweichung von mehreren Fahrzeugen von einer Route im gleichen Bereich ein Hindernis, wie ein Stau, Unfall etc., auf der ersten Route angenommen wird, so daß für Routenempfehlungen für weitere Fahrzeuge zumindest ein Teilbereich der ersteren Route nach der Abweichung vermieden wird.

Wenn aufgrund einer Plausibilitätsprüfung, eine bewußte Abweichung, also eine bevorzugte, von der empfohlenen Route abweichende Route festgestellt wird, kann die bevorzugte Route oder Teilroute in unterschiedlicher Weise bestimmt werden und zur Bestimmung einer zweiten, sie miteinbeziehenden, empfohlenen Route zur Zielposition verwendet werden.

Beispielsweise kann eine Rückführung, also Überlappung der zweiten empfohlenen Route mit der ersten emfpohlenen Route in einem auf der ersten empfohlenen Route sich bis zu einer Mindestdistanz hinter der Abweichung erstreckenden Straßenabschnitt - soweit im Verkehrsnetz möglich und sinnvoll - vermieden werden; damit kann insbesondere ein angenommener Stau, Unfall etc. nach der Abweichung umfahren werden.

Die Erfassung der aktuellen Position und der Fahrtrichtung des Fahrzeuges kann in unterschiedlicher Weise erfolgen. Eine Positionserfassung ist mit GPS möglich. Eine Fahrtrichtungserfassung kann durch mehrfache GPS-Erfassung und Differenzbildung und/oder durch Berücksichtigung von Lenkradeinschlägen eines Fahrzeuges und/oder durch einen Kompaß und/oder durch ein Richtungswechsel-Erfassungssystem erfolgen. Femer ist eine Position zur Fahrtrichtungsbestimmung alternativ oder zusätzlich aufgrund des Verfolgens der Fahrt eines Fahrzeuges in einer digitalen Karte, insbesondere unter Berücksichtigung von Lenkradeinschlägen oder Richtungsänderungen und/oder einem Distanzmesser (Kilometerzähler) möglich.

Die Übermittlung von Daten vom Endgerät an eine Verkehrszentrale erfolgt zweckmäßig per Funk, insbesondere per Mobilfunk.

Weitere Merkmale und Vorteile der Erfindung ergeben sich aus den weiteren Unteransprüchen und der nachfolgenden Beschreibung eines Ausführungsbeispiels anhand der Zeichnung. Dabei zeigt:
- Fig. 1: ein erstes Beispiel einer eine Routenneuberechnung erforderlich machenden Abweichung eines Fahrzeuges von einer ersten empfohlenen Fahrtroute durch ein Verkehrsnetz,
- Fig. 2: ein zweites Beispiel des Abweichens eines Fahrzeuges von einer empfohlenen Fahrtroute,
- Fig. 3: ein drittes Beispiel des Abweichens eines Fahrzeuges von einer Fahrtroute.

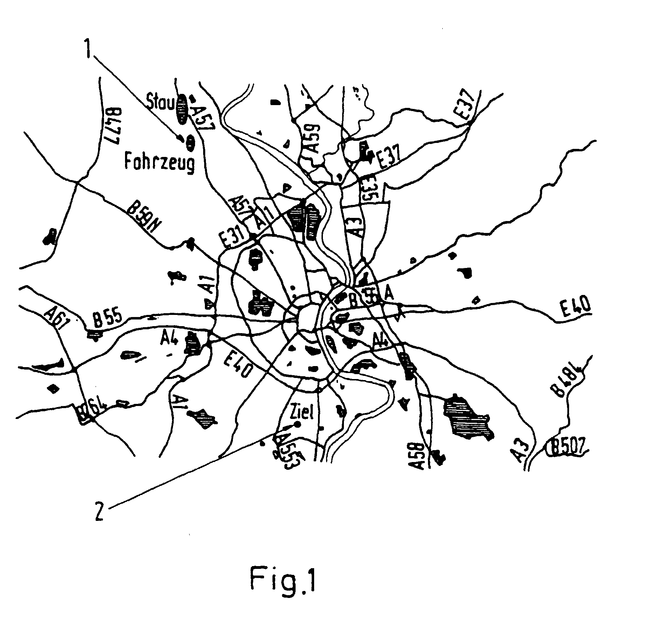

Figur 1 zeigt ausschnittsweise einen Ausschnitt eines Verkehrsnetzes, nämlich das Autobahnund Bundesstraßennetz um Köln. Einem Fahrzeug 1 , wurde aufgrund seiner Anfangsposition (beispielsweise Düsseldorf) und seiner gewünschten Zielposition (beispielsweise im Süden von Köln liegend) eine erste Route empfohlen, auf welcher sich das Fahrzeug 1 zunächst im dargestellten Beispiel auf der A57 von Norden nach Süden, also in Figur 1 von oben nach unten, fortbewegte. Dabei erhielt das Fahrzeug Navigationshinweise zur ersten empfohlenen Route, also beispielsweise Hinweise zu erforderlichen Abbiegevorgängen etc. Dabei wurde die Position des Fahrzeuges 1 im Fahrzeug 1 laufend erfaßt, wozu hier GPS (Global Positioning System) verwendet wurde. Femer wurde die Fahrtrichtung laufend erfaßt, wozu hier jeweils mehrere aufeinanderfolgende GPS-Positionen durch Differenzbildung verwendet wurden. Die Fahrtrichtung und Position des Fahrzeuges wurden laufend mit der empfohlenen Route verglichen. Dazu wurde insbesondere die Position nach einem geeigneten Verfahren einer Strecke in einer digitalen Karte des Verkehrsnetzes zugeordnet. Die digitale Karte kann im Endgerät und/oder in einer Vekehrszentrale sein. Wenn die Navigation im Fahrzeug allein autark erfolgt, befindet sich eine digitale Karte und ein Routenberechnungsprogramm im Endgerät im Fahrzeug; wenn die Navigation des Fahrzeuges wie hier durch eine Verkehrserfassungszentrale erfolgt, werden Positionsund/oder Richtungsdaten vom Fahrzeug wiederholt an eine Verkehrszentrale per Funk, hier Mobilfunk, übermittelt und in der Verkehrszentrale mit der dort berechneten empfohlenen Route verglichen sowie Daten zur empfohlenen Route per Mobilfunk etc. von der Verkehrszentrale an ein Fahrzeug 1 zur dortigen Darstellung oder Erstellung von Navigationshinweisen für einen Endgerätbenutzer übermittelt.

Im vorliegenden Fall wird im Endgerät (oder alternativ oder zusätzlich in der Verkehrszentrale) festgstellt, daß sich das Fahrzeug nicht auf einem zur empfohlenen Route gehörenden Straßensegment in einer digitalen Karte des Verkehrsnetzes (im Endgerät und/oder in der Verkehrszentrale) befindet. Im vorliegenden Beispiel befindet sich das Fahrzeug 1 westlich, also in Figur 1 links, neben der Autobahn A57, über welche die empfohlene Route führt. Deshalb erfolgt zunächt eine Plausibilitätsprüfung dahingehend, ob der Fahrer einen Grund hatte, die Route zu verlassen. Im vorliegenden Falle befinden sich in der Nähe der aktuellen Position bzw. in Richtung der Fahrtrichtung des Fahrzeuges 1 keine Autobahnen, Bundesstraßen etc., weiche zum Zielpunkt 2 führen, so daß angenommen wird, daß das Fahrzeug 1 einen lokalen Anlaß, wie beispielsweise einen Stau, Unfall etc. auf der A57 in dem Bereich,'in welchem es von der Strecke abgewichen ist, für seine Abweichung hat. Deshalb wird angenommen, daß hier eine Abweichung aufgrund einer bevorzugten Route vorliegt, und diese Information wird in die Ausarbeitung einer zweiten empfohlenen Route mit einbezogen; dies kann beispielsweise derart erfolgen, daß keine Rückführung auf die A57 erfolgt oder daß eine Rückführung auf die A57 erst nach einer bestimmten Strecke etc. erfolgt. Im ersteren Falle wird das Fahrzeug 1 über hier nicht dargestellte Dorfstraßen zur B59N und weiter zum Zielpunkt 2 geführt.

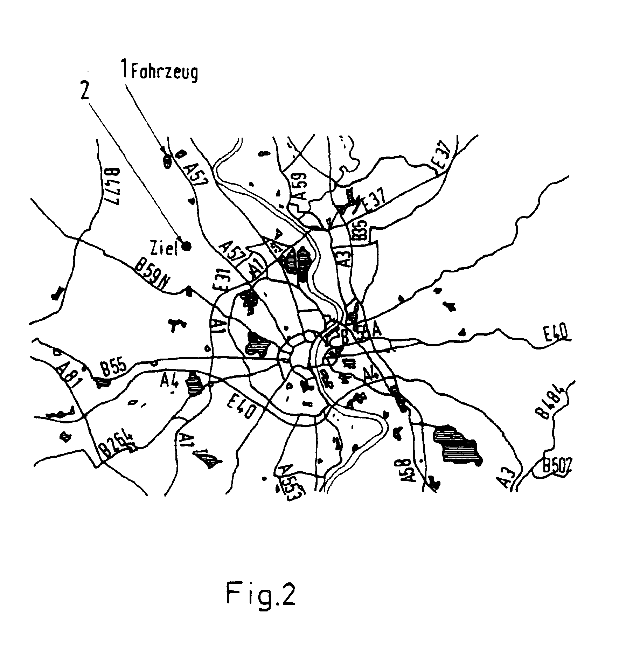

Im Beispiel in Figur 2 wird aufgrund einer Position des Fahrzeuges 1 seitlich der A57 festgestellt, daß es die A57 verlassen hat. Jedoch liegt hier das Ziel in der Nähe, so daß ein versehentliches Abbiegen des Fahrzeuges von der Autobahn A57 an einer verfrühten Abfahrt möglich ist, so daß die Plausibilitätskontrolle nicht das sichere Vorliegen einer bevorzugten Route, welche von der empfohlenen ersten Route abweicht, ergibt. Deshalb wird hier zum Beispiel ein Rückführen des Fahrzeugs 1 auf die A57 empfohlen.

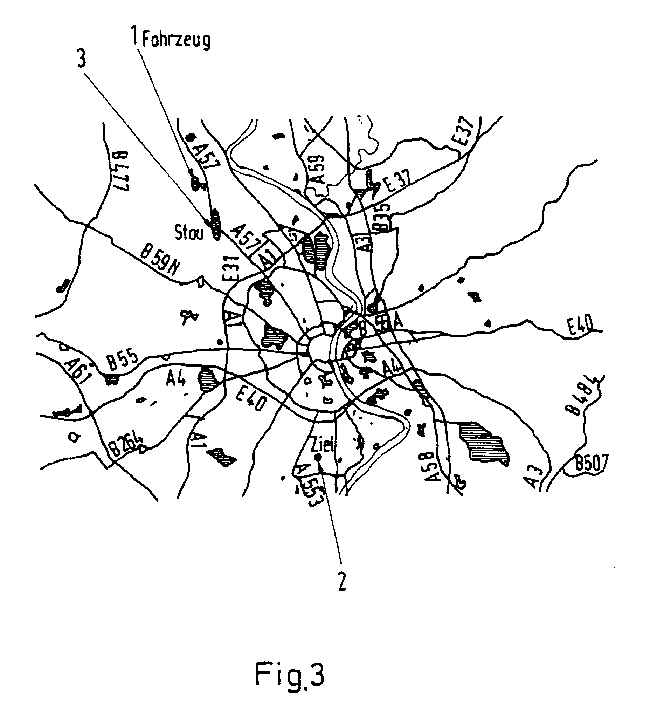

Im Beispiel in Figur 3 wird in Fahrtrichtung des Fahrzeuges 1 von der Verkehrszentrale aufgrund von beispielsweise stationären und/oder mobilen Verkehrsdetektoren ein Bereich 3 mit zähfließendem Verkehr in Fahrtrichtung auf der empfohlenen ersten Route erkannt, so daß die Plausibilitätsprüfung ergibt, daß das Fahrzeug wegen einer vom Fahrer des Fahrzeuges aufgrund eines Staus bevorzugten Route von der ersteren empfohlenen Route abgewichen ist. Deshalb wird hier eine zweite empfohlene Route derart bestimmt, daß das Fahrzeug 1 nicht auf die A57 und damit in den Stau 3 zurückgeführt wird, sondern eine Umfahrung des Staus 3 über Nebenstraßen erfolgt und erst danach eine Rückführung auf die A57 erfolgt oder indem eine völlig neue, die A57 umfahrende neue Route über die B59N, die A1, die E40 und die A53 zum Ziel 2 geplant wird.

Neben einer Routenneuberechnung beim Verlassen einer Route optimiert das erfindungsgemäße Verfahren auch die erste Berechnung einer Route.

Das Verfahren kann als Programm in einem Endgerät und/oder einer Verkehrszentrale implementiert sein. Das Programm umfaßt insbesondere im Endgerät und/oder in der Zentrale ein Routenberechnungsteilprogramm, ein Teilprogramm zur Abfrage der Anfangsposition und der gewünschten Zielposition, ein Teilprogramm zur Erfassung der Fahrzeugposition und/oder der Fahrtrichtung und ein Programm zur Zuordnung der Fahrtposition und/oder Fahrtrichtung zu einer digitalen Karte im Endgerät oder in der Verkehrszentrale.

## Patentansprüche

1. Verfahren zur rechnergestützten Navigation eines ein Endgerät aufweisenden Fahrzeuges in einem Verkehrsnetz unter Verwendung einer digitalen Karte des Verkehrsnetzes,
wobei am Endgerät vom Benutzer ein gewünschter Zielort abgefragt wird,
wobei eine Route zum Zielort bestimmt wird, die das bisherige Fahrverhalten berücksichtigt, wobei die Bestimmung einer Route in einer Verkehrszentrale erfolgt, wobei, wenn das Fahrzeug vor der Routenabfrage auf einer Straße höherer Kategorie langsamer gefahren ist als auf dieser Straße zu-erwarten ist, diese Straße, von welcher das Fahrzeug gerade abgebogen ist, zumindest auf einer bestimmten Strecke hinter der aktuellen Fahrzeugposition bei der Routenberechnung ausgeschlossen wird.

2. Verfahren nach Anspruch 1,
**dadurch gekennzeichnet,**
**dass**, wenn das Fahrzeug von einer Straße auf eine Straße niedrigerer Kategorie abbiegt, die Route unter Berücksichtigung dieser Straße niedrigerer Kategorie berechnet wird.

3. Verfahren nach einem der vorhergehenden Ansprüche,
**dadurch gekennzeichnet,**
**dass**, wenn auf der vor der Routenabfrage befahrenen Straße höherer Kategorie ein Stau oder dergleichen gemeldet wird, diese Straße bei der Routenberechnung zumindest auf einer bestimmten Strecke hinter der aktuellen Fahrzeugposition ausgeschlossen wird.

4. Verfahren nach einem der vorhergehenden Ansprüche,
**dadurch gekennzeichnet,**
**dass** Daten zu einer empfohlenen Route von der Verkehrszentrale an das Endgerät per Funk, insbesondere Mobilfunk, übertragen werden.

5. Verfahren nach einem der vorhergehenden Ansprüche,
**dadurch gekennzeichnet,**
**dass** zum Bestimmen der vom Fahrer bevorzugten Route oder Teilroute die Position des Fahrzeuges einem Straßenabschnitt oder dgl. in einer digitalen Karte zugeordnet wird.

6. Verfahren nach einem der vorhergehenden Ansprüche,
**dadurch gekennzeichnet,**
**dass** Parameter der Plausibilitätsprüfung im Endgerät von einer Verkehrszentrale per Funk modifizierbar sind.

7. Verfahren nach einem der vorhergehenden Ansprüche,
**dadurch gekennzeichnet,**
**dass** zum-Bestimmen der empfohlenen Route Verkehrsinformationen verwendet werden.

8. Verfahren nach einem der vorhergehenden Ansprüche,
**dadurch gekennzeichnet,**
**dass** zum Bestimmen der empfohlenen Route Entfernungen in der digitalen Karte und/oder Reisezeiten oder dgl. verwendet werden.

9. Verfahren nach einem der vorhergehenden Ansprüche,
**dadurch gekennzeichnet,**
**dass** die aktuelle Position und/oder Fahrtrichtung des Fahrzeuges mit GPS erfaßt wird.

10. Verfahren nach einem der vorhergehenden Ansprüche,
**dadurch gekennzeichnet,**
**dass** die aktuelle Fahrtrichtung von einem Kompaß erfaßt wird.

11. Verfahren nach einem der vorhergehenden Ansprüche,
**dadurch gekennzeichnet,**
**dass** die aktuelle Fahrtrichtung aufgrund von Lenkradeinschlägen erfaßt wird.

12. Verfahren nach einem der vorhergehenden Ansprüche,
**dadurch gekennzeichnet,**
**daß** die aktuelle Position des Fahrzeuges aufgrund von Lenkradeinschlägen und einem Distanzmesser erfaßt wird.

13. Endgerät mit einem Speicher, mit einem im Speicher gespeicherten Programm zur Durchführung des Verfahrens nach einem der vorhergehenden Ansprüche oder nach Merkmalen mindestens eines der vorhergehenden Ansprüche, mit einem Prozessor zum Abarbeiten des Programms, mit einer optischen und/oder akustischen Benutzerschnittstelle und mit einer Eingabevorrichtung für zumindest eine Zielposition.

14. Endgerät nach Anspruch 13,
**dadurch gekennzeichnet,**
**dass** es eine Kommunikationseinrichtung zum Empfangen von Daten zu empfohlenen Routen von einer Verkehrszentrale aufweist.

15. Endgerät nach Anspruch 14,
**dadurch gekennzeichnet,**
**dass** das Endgerät eine Mobilfunkeinrichtung aufweist.

16. Endgerät nach Anspruch 13, 14 oder 15,
**dadurch gekennzeichnet,**
**dass** das Endgerät ein GPS-System aufweist.

17. Endgerät nach einem der Ansprüche 13 bis 16,
**dadurch gekennzeichnet,**
**dass** das Endgerät eine digitale Karte des Verkehrsnetzes in einem Speicher aufweist.

18. Verkehrszentrale mit einem Speicher, mit einem im Speicher gespeicherten Programm zur Durchführung des Verfahrens nach einem der vorhergehenden Verfahrensansprüche oder nach Merkmalen mindestens eines der vorhergehenden Verfahrensansprüche, mit einem Prozessor zum Abarbeiten des Programms, mit einer digitalen Karte des Verkehrsnetzes, mit einer Kommunikationseinrichtung zum Empfangen von einen gewünschten Zielort und den aktuellen Ort eines Fahrzeuges betreffenden Daten und zum Übersenden von eine in der Verkehrszentrale erstellte Route betreffenden Daten an das Endgerät.

19. Verkehrszentrale nach Anspruch 18,
**dadurch gekennzeichnet,**
**dass** die Kommunikationseinrichtung eine Mobilfunkeinrichtung ist.

## Claims

1. A method for computer-assisted navigation of a vehicle having a terminal in a traffic network using a digital map of the traffic network,
wherein the user enters a desired destination into the terminal,
wherein a route to the destination is determined which takes account of previous driving behaviour, wherein route determination is performed in a central traffic management exchange, wherein, if, prior to route interrogation, the vehicle is driven on a relatively high category road at a slower speed than is to be expected on that road, said road, off which the vehicle has just turned, is excluded from the route calculation, at least over a certain distance beyond the current vehicle position.

2. A method according to claim 1,
**characterised in that**,
if the vehicle turns from one road onto a road of a lower category, the route is calculated taking account of this lower category road.

3. A method according to one of the preceding claims,
**characterised in that**,
if a traffic jam or the like is reported on the higher category road travelled prior to route interrogation, this road is excluded from the route calculation at least over a certain distance beyond the current vehicle position.

4. A method according to one of the preceding claims,
**characterised in that**,
data relating to a recommended route are transmitted by the central traffic management exchange to the terminal by radio, in particular cellular radio.

5. A method according to one of the preceding claims,
**characterised in that**
to determine the route or subroute preferred by the driver, the position of the vehicle is assigned to a road portion or the like on a digital map.

6. A method according to one of the preceding claims,
**characterised in that**
plausibility test parameters in the terminal may be modified by radio by a central traffic management exchange.

7. A method according to one of the preceding claims,
**characterised in that**
traffic information is used to determine the recommended route.

8. A method according to one of the preceding claims,
**characterised in that**,
distances on the digital map and/or journey times or the like are used to determine the recommended route.

9. A method according to one of the preceding claims,
**characterised in that**
the current position and/or travelling direction of the vehicle is detected by GPS.

10. A method according to one of the preceding claims,
**characterised in that**
the current travelling direction is detected by compass.

11. A method according to one of the preceding claims,
**characterised in that**
the current travelling direction is detected on the basis of steering wheel deflection.

12. A method according to one of the preceding claims,
**characterised in that**
the current position of the vehicle is detected on the basis of steering wheel deflection and a distance meter.

13. A terminal having a memory, a program stored in the memory for performing the method according to one of the preceding claims or according to features of at least one of the preceding claims, a processor for running the program, a visual and/or acoustic user interface and an input device for at least one destination.

14. A terminal according to claim 13,
**characterised in that**
it comprises a communication device for receiving data concerning recommended routes from a central traffic management exchange.

15. A terminal according to claim 14,
**characterised in that**
the terminal comprises a cellular radio device.

16. A terminal according to claim 13, 14, or 15,
**characterised in that**
the terminal comprises a GPS system.

17. A terminal according to one of claims 13 to 16,
**characterised in that**
the terminal comprises a digital map of the traffic network in a memory.

18. A central traffic management exchange having a memory, a program stored in the memory for performing the method according to one of the preceding method claims or according to features of at least one of the preceding method claims, a processor for running the program, a digital map of the traffic network, a communication device for receiving data relating to a desired destination and the current location of a vehicle and for transmitting to the terminal data relating to a route drawn up in the central traffic management exchange.

19. A central traffic management exchange according to claim 18,
**characterised in that**
the communication device is a cellular radio device.

## Revendications

1. Procédé de navigation assistée par ordinateur d'un véhicule équipé d'un terminal dans un réseau de trafic en utilisant une carte numérique du réseau de trafic, procédé dans lequel une destination souhaitée est indiquée par l'utilisateur sur le terminal, dans lequel un itinéraire vers la destination est déterminé, en tenant compte de la conduite jusqu'à présent, dans lequel la détermination d'un itinéraire est effectuée dans une centrale de trafic et dans lequel, quand le véhicule se déplace avant l'interrogation d'itinéraire sur une voie de catégorie supérieure plus lentement qu'attendu, cette voie, de laquelle le véhicule a précisément dévié, est exclue, au moins sur une étendue déterminée derrière la position actuelle du véhicule, lors du calcul d'itinéraire.

2. Procédé selon la revendication 1,
**caractérisé en ce que**, lorsque le véhicule passe d'une voie à une voie de catégorie inférieure, l'itinéraire est calculé en tenant compte de cette voie de catégorie inférieure.

3. Procédé selon une des revendications précédentes,
**caractérisé en ce que**, quand, sur la voie, empruntée avant l'interrogation d'itinéraire, de catégorie supérieure, un embouteillage ou analogue est signalé, cette voie est exclue, lors du calcul d'itinéraire, au moins sur une étendue déterminée derrière la position actuelle du véhicule.

4. Procédé selon une des revendications précédentes,
**caractérisé en ce que** des données sur un itinéraire recommandé sont transmises par la centrale de trafic au terminal par radio, en particulier radiotéléphone mobile.

5. Procédé selon une des revendications précédentes,
**caractérisé en ce que**, pour déterminer l'itinéraire ou l'itinéraire partiel préféré par le conducteur, la position du véhicule est associée à un tronçon de voie ou analogue sur une carte numérique.

6. Procédé selon une des revendications précédentes,
**caractérisé en ce que** des paramètres du contrôle de vraisemblance peuvent être modifiés dans le terminal par une centrale de trafic par radio.

7. Procédé selon une des revendications précédentes,
**caractérisé en ce que** des informations de trafic sont utilisées pour déterminer l'itinéraire recommandé.

8. Procédé selon une des revendications précédentes,
**caractérisé en ce que**, pour déterminer l'itinéraire recommandé, on utilise des distances sur la carte numérique et/ou des durées de trajet ou analogues.

9. Procédé selon une des revendications précédentes,
**caractérisé en ce que** la position actuelle et/ou la direction de déplacement du véhicule sont déterminées par GPS.

10. Procédé selon une des revendications précédentes,
**caractérisé en ce que** la direction de déplacement actuelle est déterminée par une boussole.

11. Procédé selon une des revendications précédentes,
**caractérisé en ce que** la direction de déplacement actuelle est déterminée sur la base du braquage des roues directrices.

12. Procédé selon une des revendications précédentes,
**caractérisé en ce que** la position actuelle du véhicule est déterminée sur la base du braquage des roues directrices et d'un appareil mesureur de distance.

13. Terminal, comportant une mémoire, ayant un programme stocké dans la mémoire, pour mettre en oeuvre le procédé selon une des revendications précédentes ou selon des caractéristiques d'au moins une des revendications précédentes, comportant un processeur pour traiter le programme, une interface d'utilisateur optique et/ou acoustique, et un dispositif d'entrée pour au moins une position visée.

14. Terminal selon la revendication 13,
**caractérisé en ce qu'**il présente un dispositif de communication pour recevoir des données sur des itinéraires recommandés par une centrale de trafic.

15. Terminal selon la revendication 14,
**caractérisé en ce que** le terminal présente un dispositif de téléphonie mobile.

16. Terminal selon la revendication 13, 14 ou 15,
**caractérisé en ce que** le terminal présente un système GPS.

17. Terminal selon une des revendications 13 à 16,
**caractérisé en ce que** le terminal présente une carte numérique du réseau de trafic dans une mémoire.

18. Centrale de trafic comportant une mémoire, ayant un programme stocké dans la mémoire, pour mettre en oeuvre le procédé selon une des revendications de procédé précédentes ou selon des caractéristiques d'au moins une des revendications de procédé précédentes, comportant un processeur pour traiter le programme, une carte numérique du réseau de trafic, un dispositif de communication pour recevoir des données concernant une destination souhaitée ou le lieu actuel d'un véhicule et pour transmettre des données concernant un itinéraire élaboré dans la centrale de trafic au terminal.

19. Centrale de trafic selon la revendication 18,
**caractérisée en ce que** le dispositif de communication est un dispositif de téléphonie mobile.
